# EUROPÄISCHE PATENTSCHRIFT

(11) **EP 1 981 739 B1**
(45) Veröffentlichungstag und Bekanntmachung des Hinweises auf die Patenterteilung: **15.07.2009**
(21) Anmeldenummer: 07711393.4
(22) Anmeldetag: 27.01.2007
(51) Int. Cl.: B60R 22/46

(54) **GURTAUFROLLER MIT KUPPLUNGSBLOCKADE**
BELT RETRACTOR WITH A COUPLING BLOCKADE
ENROULEUR DE CEINTURE AVEC BLOCAGE DE L'ACCOUPLEMENT

(30) Priorität: 07.02.2006 DE 102006005434
(43) Veröffentlichungstag der Anmeldung: 22.10.2008
(73) Patentinhaber: Autoliv Development AB, 447 83 Vargarda (SE)
(72) Erfinder: WITTENBERG, Geert, Helge, 22848 Norderstedt (DE); STUMPF, Marcus, 21409 Oerzen (DE)
(74) Vertreter: Müller, Karl-Ernst
(86) Internationale Anmeldenummer: PCT/EP2007/000713
(87) Internationale Veröffentlichungsnummer: WO 2007/090530

(56) Entgegenhaltungen:
- WO-A-20/05021339
- DE-C1- 10 059 227
- US-A- 5 918 717
- US-B1- 6 419 176

## Beschreibung

Die Erfindung betrifft einen selbstsperrenden Gurtaufroller mit einer insbesondere bei einem Unfall auslösbaren Notfallstraffeinrichtung für die Gurtwelle und mit einer ebenfalls an die Gurtwelle angeschlossenen zweiten, als reversibel arbeitende Vorstraffeinrichtung ausgebildeten Straffereinrichtung, wobei die Notfallstraffeinrichtung mit einer größeren Drehgesch.windigkeit ausgelegt ist als die von der Vorstraffeinrichtung erzeugte Drehgeschwindigkeit und eine zwischen Vorstraffeinrichtung und Gurtwelle eingerichtete und ein bewegliches Kupplungsglied aufweisende Kupplung derart ausgebildet ist, dass nach Auslösung der Notfallstraffeinrichtung die dadurch in eine schnellere Drehung versetzte Gurtwelle das Kupplungsglied in dessen Freigabestellung zurückführt und so die Kupplungsverbindung zwischen Gurtwelle und Vorstraffeinrichtung aufhebt.

Ein selbstsperrender Gurtaufroller mit den vorgenannten Merkmalen ist in der WO 2005/021339 A1 beschrieben. Bei einem gattungsgemäßen Gurtaufroller geht es darum, die Notfallstraffeinrichtung und die Vorstraffeinrichtung so aufeinander abzustimmen, dass sich die beiden Strafferantriebe nicht gegenseitig behindern, wenn die pyrotechnische Notfallstraffeinrichtung bereits ausgelöst wird, wenn die elektromotorisch arbeitende Vorstraffeinrichtung noch wirksam ist. Im Falle einer solchen Behinderung kann es nämlich nicht zu einer optimalen Ausnutzung der installierten Straffenergie kommen. Zur Beseitigung dieser Abstimmungsprobleme ist bei dem gattungsgemäßen Gurtaufroller vorgesehen, dass bei Auslösung der Notfallstraffeinrichtung die mit hoher Drehgeschwindigkeit sich drehende Gurtwelle das die zwischen der Gurtwelle und der Vorstraffeinrichtung erforderliche Kopplung herbeiführende Kupplungsglied in dessen Freigabestellung zurückführt, so dass die Kupplungsverbindung zwischen Gurtwelle und Vorstraffeinrichtung aufgehoben ist und insoweit die Vorstraffeinrichtung die Wirksamkeit der Notfallstraffeinrichtung nicht mehr behindern kann.

Mit dem bekannten selbstsperrenden Gurtaufroller ist jedoch noch der Nachteil verbunden, dass im Anschluss an die Rückführung des Kupplungsgliedes es während der Wirksamkeit der pyrotechnisch arbeitenden Notfallstraffeinrichtung durchaus zu einer erneuten Einsteuerung des Kupplungsgliedes durch den nach wie vor wirksamen Antrieb der Vorstraffeinrichtung kommen kann, und diese erneute Verbindung des Kupplungsgliedes mit der sich mit hoher Drehgeschwindigkeit drehenden Gurtwelle kann eine Zerstörung der Kupplung mit einer entsprechend auftretenden Kraftspitze zur Folge haben. Derartige Kraftspitzen jedoch sind während eines Notfallgeschehens unerwünscht.

Der Erfindung liegt daher die Aufgabe zugrunde, einen selbstsperrenden Gurtaufroller mit den gattungsgemäßen Merkmalen so weiterzubilden, dass nach dem Ansprechen der pyrotechnischen Notfallstraffeinrichtung eine erneute Ankupplung der Vorstraffeinrichtung ausgeschlossen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass das mit der Gurtwelle verbundene Kupplungsteil der Kupplung an der Gurtwelle über wenigstens eine Sollbruchstelle lösbar befestigt und derart ausgebildet ist, dass bei Auslösung der Notfallstraffeinrichtung das Kupplungsteil gegenüber der mit der größeren Drehgeschwindigkeit in Drehung versetzten Gurtwelle bis zum Abreißen der wenigstens einen Sollbruchstelle zurückbleibt. Mit der Erfindung ist der Vorteil verbunden, dass bei der schnellen Anlaufbewegung der Gurtwelle aufgrund der Einwirkung der Notfallstraffeinrichtung und damit auch des damit verbundenen Kupplungsteils das Kupplungsteil aufgrund seiner Ausbildung gegenüber der Drehung der Gurtwelle zurückbleibt beziehungsweise relativ dazu festgesetzt wird, so dass das Kupplungsteil durch die auftretende Relativbewegung von der Gurtwelle getrennt wird. Damit kann eine gegebenenfalls von der Vorstraffeinrichtung weiterhin beziehungsweise nochmals bewirkte Einkupplung der Kupplungsklinke in das nunmehr von der Gurtwelle getrennte Kupplungsteil die von der Notfallstraffeinrichtung bewirkte Drehung der Gurtwelle in Aufwickelrichtung nicht mehr hindern.

Als weiterer Vorteil ist noch zu sehen, dass im Falle eines durch plötzliche Vorverlagerung des Insassen erfolgenden Gurtbandauszuges noch während der auf die Gurtwelle in Aufwickelrichtung einwirkenden Vorstraffeinrichtung aufgrund der gegenläufigen Einwirkungen auf die Gurtwelle sich zwangsläufig das Kupplungsteil von der Gurtwelle trennt, so dass auch in diesem Fall eine weitere Einwirkung der Vorstraffeinrichtung ausgeschlossen ist.

Nach einem Ausführungsbeispiel der Erfindung ist vorgesehen, dass das Kupplungsteil mit einer seine Beharrung gegenüber der schnell drehenden Gurtwelle herbeiführenden großen Masseträgheit ausgebildet ist. Bei diesem Ausführungsbeispiel bewirkt die dem Kupplungsteil gegebene Masseträgheit, dass dieses Kupplungsteil gegenüber der Drehbewegung der Welle zurückgreift und dadurch abreißt.

Alternativ ist nach einem Ausführungsbeispiel der Erfindung vorgesehen, dass an dem Kupplungsteil eine durch die bei anfänglicher schneller Drehung des Kupplungsteils gemeinsam mit der Gurtwelle einwirkenden Fliehkräfte in Eingriff mit einem weiteren Bestandteil des Gurtaufrollers ausgesteuerte Fliehkraftkupplung angeordnet ist.

In einer Ausführungsform der Erfindung kann dabei vorgesehen sein, dass der zum Eingriff der Fliehkraftkupplung eingerichtete weitere Bestandteil des Gurtaufrollers ein unbewegliches Bauteil des Gurtaufrollers ist, also ein ortsfestes Bauteil des Gurtaufrollers, beispielsweise ein Gehäuseteil. Alternativ dazu kann vorgesehen sein, dass der zum Eingriff der Fliehkraftkupplung eingerichtete weitere Bestandteil des Gurtaufrollers das von der Vorstraffeinrichtung beaufschlagte Abtriebsrad ist; soweit sich dass von der Vorstraffeinrichtung beaufschlagte Abtriebsrad selbst bei eingekuppelter Kupplung bei Auslösung der Notfallstraffeinrichtung jedenfalls langsamer dreht als die Gurtwelle beziehungsweise das damit verbundene Kupplungsteil, kann das diesbezügliche Abtriebsrad als gegenüber der bei Auslösung der Notfallstraffeinrichtung in schnelle Drehung versetzten Gurtwelle mit Kupplungsteil quasi stehend angesehen werden, so dass eine Verbindung des Kupplungsteils mit dem Antriebsrad über eine Fliehkraftkupplung zu einem Abreißen des Kupplungsteils von der Gurtwelle führt.

In einer ersten Ausführungsform der Erfindung kann vorgesehen sein, dass die Fliehkraftkupplung aus einer an dem Kupplungsteil radial ausschwenkbar gelagerten Zahnklinke besteht, der eine am weiteren Bestandteil des Gurtaufrollers ausgebildete Gegenverzahnung zugeordnet ist; diese Gegenverzahnung kann somit an einem gehäusefesten Bauteil des Gurtaufrollers oder an dem Abtriebsrad ausgebildet sein.

Es kann ebenfalls vorgesehen sein, dass die Fliehkraftkupplung aus wenigstens einer sich unter Einwirkung der Fliehkraft radial aufstellenden Bremsbacke besteht, die mit dem weiteren Bestandteil des Gurtaufrollers in Eingriff gelangt.

In der Zeichnung ist ein Ausführungsbeispiel der Erfindung wiedergegeben, welches nachstehend beschrieben ist. Es zeigen:
- Fig. 1: einen Gurtaufroller mit zwei Straffeinrichtungen in einer geschnittenen Seitenansicht,
- Fig. 2: die Kupplungsverbindung zwischen Vorstraffeinrichtung und Gurtwelle in der Ausgangsstellung des Kupplungsgliedes in einer Einzeldarstellung im Schnitt, wobei die Bewegungsverhältnisse beim Vorstraffen kenntlich gemacht sind,
- Fig. 3: den Gegenstand der Figur 2 mit unverändert angeordnetem Kupplungsglied, wobei jedoch die beim Notfallstraffen auftretenden Bewegungsverhältnisse kenntlich gemacht sind,
- Fig. 4: die Gurtwelle mit angeschlossener Kupplungsglocke und Abtriebsrad in einer vergrößerten Darstellung,
- Fig. 5: den Gegenstand der Figur 4 in einem vergrößerten Ausschnitt aus Figur 4,
- Fig. 6: die zwischen Kupplungsglocke und Abtriebsrad wirkende Fliehkraftkupplung in einer vergrößerten Darstellung.

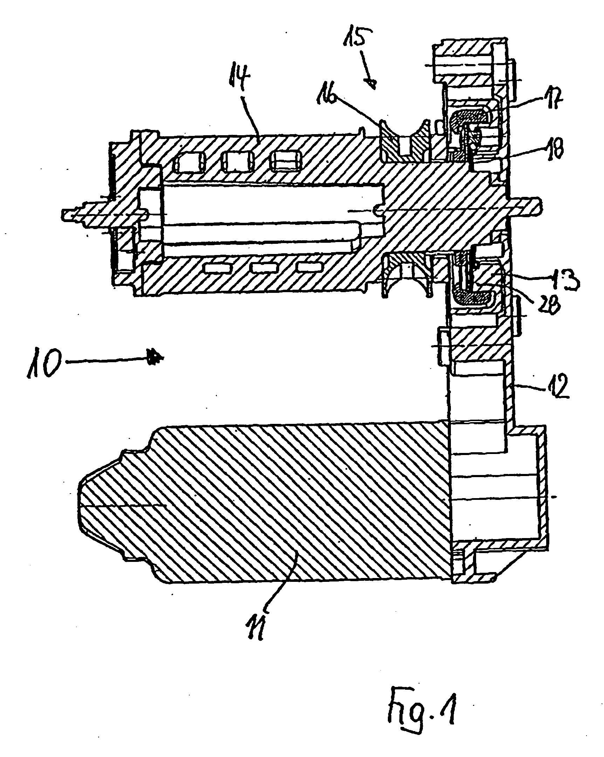

Der aus Figur 1 ersichtliche Gurtaufroller 10 besteht.in einer vereinfachten Darstellung aus der Anordnung einer Gurtwelle 14 und einer Vorstraffeinrichtung in Form eines Elektromotors 11 als Antrieb dafür; die Gurtwellenanordnung und der Elektromotor 11 sind über ein Verbindungsgehäuse 12 miteinander verbunden, welches als Getriebegehäuse ausgebildet ist derart, dass die Antriebsbewegung des Elektromotors 11 beispielsweise über ein in dem Verbindungsgehäuse 12 angeordnetes, im einzelnen nicht dargestelltes Getriebe in eine Drehung eines Abtriebsrades 13 umgesetzt werden kann, wobei das Abtriebsrad 13 in dem Verbindungsgehäuse 12 gelagert ist.

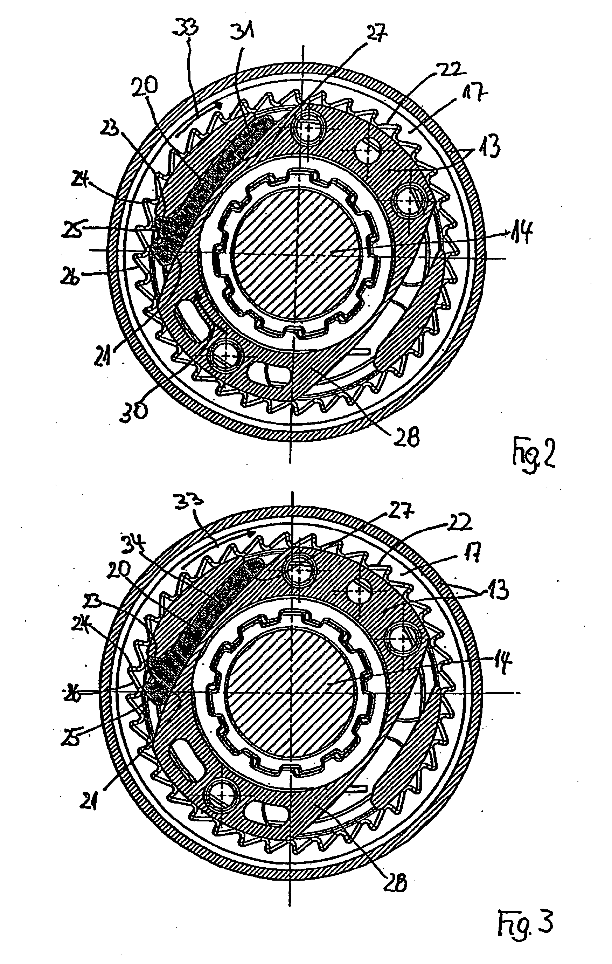

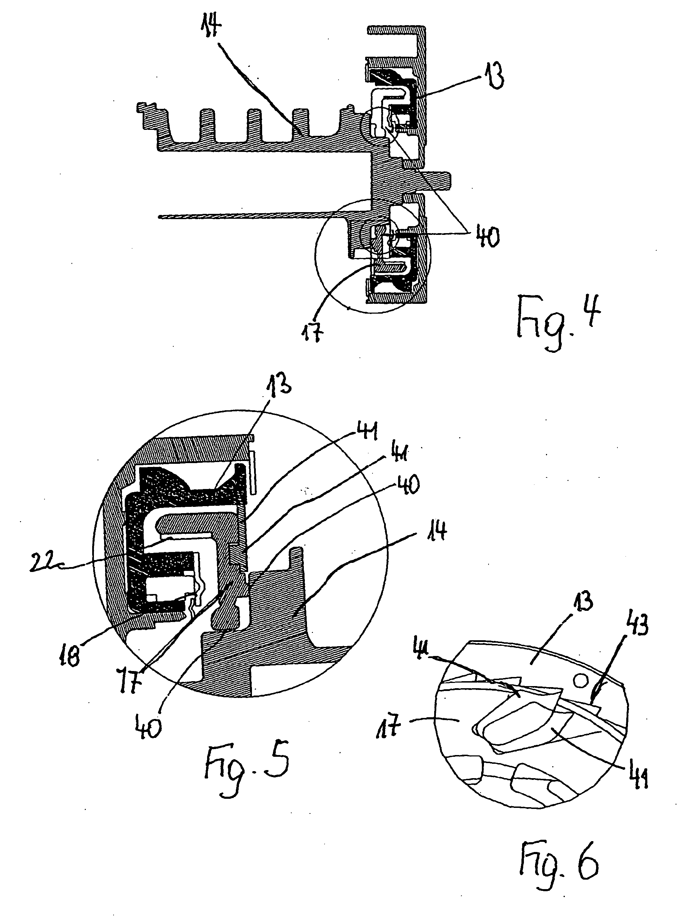

Auf die Gurtwelle 14 wirkt eine vorzugsweise pyrotechnisch ausgebildete Notfallstraffeinrichtung 15, die als an sich bekannter Kugelstraffer ausgebildet sein kann; mit 16 ist ein Strafferrad als Bestandteil einer bekannten Kugelsträffeinrichtung bezeichnet, welches fest auf der Gurtwelle 14 sitzt. Ebenfalls fest mit der Gurtwelle 14 ist eine innen-verzahnte Kupplungsglocke 17 verbunden, die in das Abtriebsrad hineinreicht und sich mit einem inneren Ansatz 28 des Abtriebsrades 13 derart überlagert, dass eine noch zu beschreibende Kupplung ausgebildet werden kann. Diese Kupplung ist im einzelnen aus den Figuren 2 und 4 ersichtlich.

In den Figuren 2 und 3 ist die Kupplungsverbindung zwischen dem Antriebsrad 13 und der Kupplungsglocke 17 dargestellt. Hierzu ist in einer in dem Abtriebsrad 13 ausgebildeten Ausnehmung 19 als Kupplungsglied eine Zahnscheibe 20 mit einer an dieser ausgebildeten Außenverzahnung 21 verschiebbar angeordnet. In einer Stellung, in welcher die Zahnscheibe 20 gegenüber der in den Figuren 2 und 3 dargestellten Stellung derart nach außen verschoben ist, dass die Außenverzahnung 21 über den Umfang eines inneren Ansatzes 28 des Abtriebsrades 13 hervorsteht, gelangt die Außenverzahnung 21 der Zahnscheibe 20 in Eingriff mit der Innenverzahnung 22 der Kupplungsglocke 17, wodurch die Kupplungsverbindung zwischen dem Abtriebsrad 13 der Vorstraffeinrichtung und der Gurtwelle 14 hergestellt ist. Zur Einleitung der Verschiebebewegung der Zahnscheibe 20 nach außen aus der in der Figur 2 beziehungsweise der Figur 3 dargestellten Position ist ein in Figur 1 mit 18 bezeichnetes Reibelement vorgesehen, welches bei anfänglicher Drehung des Abtriebsrades 13 zunächst die Zahnscheibe 20 festhält, so dass aufgrund der anfänglichen Relativbewegung zwischen Abtriebsrad und Reibelement 18 die Zahnscheibe 20 längs der Führungsbahn 27 nach außen verschoben wird.

Unter Bezugnahme auf Figur 2 wird nachstehend der Bewegungsablauf bei Ansprechen des Elektromotors 11 beschrieben, der zunächst das Abtriebsrad 13 in Richtung des Pfeils 30, also im Uhrzeigersinn dreht. Da die Zahnscheibe 20 in der Ausnehmung 19 des Abtriebsrades 13 aufgrund der Wirkung des Reibelements 18 zunächst einmal festgehalten wird, kommt es zu einer Ausschubbewegung der Zahnscheibe 20 längs der Führungsbahn 27 in Richtung des Pfeils 31, so dass die Außenverzahnung 21 in Eingriff mit der Innenverzahnung 22 der Kupplungsglocke 17 gelangt. Dabei sind die in der Drehrichtung (Pfeil 30) des Abtriebsrades 13 orientierten Zahnflanken 23 der Außenverzahnung 21 und Zahnflanken 24 der Innenverzahnung 22 in etwa radial derart ausgerichtet, dass ein fester Verzahnungseingriff gegeben ist. Dies führt zu einer Mitnahme der Kupplungsglocke 17 in Richtung des Pfeils 32 (im Uhrzeigersinn), so dass aufgrund der festen Verbindung der Kupplungsglocke 17 mit der Gurtwelle 14 die Gurtwelle 14 ebenfalls in Straffrichtung gedreht wird.

Kommt es während eines nicht weiter dargestellten bestehenden Verzahnungseingriffs von Zahnscheibe 20 und Kupplungsglocke 17 zu einer Auslösung der pyrotechnischen Notfallstraffeinrichtung 15, so wird die Kupplungsglocke 17 mit einer entsprechend größeren Drehbeschleunigung in Richtung des Pfeils 33 (im Uhrzeigersinn) gedreht, so dass die Kupplungsglocke 17 das sich drehende Abtriebsrad 13 überholt. Damit heben die Zahnflanken 23 und 24 voneinander ab, und es kommen nun die in einer entsprechenden Winkelanordnung ausgebildeten Zahnflanken 25 an der Außenverzahnung 21 sowie Zahnflanken 26 an der Innenverzahnung 22 in Anlage, die bezüglich der Drehrichtung derart ausgerichtet sind, dass die Zahnscheibe 20 mit ihren an den Zahnflanken 26 der Innenverzahnung 22 aufgrund der langsameren Drehgeschwindigkeit des Abtriebsrades 13 ablaufenden Zahnflanken 25 in die Ausnehmung 19 des Abtriebsrades 13 zurückgeführt wird, so dass die Kupplungsverbindung zwischen dem Abtriebsrad 13 und der Gurtwelle 14 aufgehoben ist.

Soweit nun bei Auslösung der Notfallstraffeinrichtung 15 sicherzustellen ist, dass während des Betriebs der Notfallstraffeinrichtung eine erneute Ankupplung des Abtriebsrades 13 an die Gurtwelle 14 ausgeschlossen ist, ist gemäß dem in Figuren 4 bis 6 dargestellten Ausführungsbeispiel die Kupplungsglocke 17 zunächst über wenigstens eine, bei dem dargestellten Ausführungsbeispiel vorzugsweise über vier gleichmäßig über den Umfang von Gurtwelle 14 beziehungsweise Kupplungsglocke 17 verteilt angeordnete Sollbruchstellen 40 mit der Gurtwelle 14 verbunden. An der Kupplungsglocke 17 ist eine radial ausschwenkbare Zahnklinke 41 gelagert, die so ausgelegt ist, dass sie erst bei der in einer Notfallstraffung wirkenden Drehgeschwindigkeit von Gurtwelle 14 beziehungsweise Kupplungsglocke 17 radial nach außen schwenkt. In dem die Kupplungsglocke 17 außen umschließenden Bereich des Abtriebsrades 13 ist eine Innenverzahnung 43 ausgebildet, die zum Eingriff der Zahnklinke 41 in deren ausgeschwenkter Stellung eingerichtet ist. Erfolgt demnach eine Auslösung der Notfallstraffeinrichtung 15 und kommt es demzufolge zu einer Drehung von Gurtwelle 14 mit Kupplungsglocke 17 mit einer Drehgeschwindigkeit, die wie beschrieben höher ist als die bei Funktion der das Abtriebsrad 13 drehenden Vorstraffeinrichtung gegebenen Drehgeschwindigkeit des Abtriebsrades 13 ist, so schwenkt die Zahnklinke 41 in die Innenverzahnung 43 des Abtriebsrades 13 aus und verriegelt die Kupplungsglocke 17 mit dem Abtriebsrad 13. Soweit auf diese Weise die Drehung der Kupplungsglocke 17 entsprechend verlangsamt wird, kommt es zu einem Abreißen der Kupplungsglocke 17 von der Gurtwelle 14, mit der Folge, dass im Anschluss daran eine Ankupplung des Abtriebsrades 13 an die Gurtwelle 14 nicht mehr möglich ist, weil eine eventuelle Ausschubbewegung der Zahnscheibe 20 in Eingriff mit der Kupplungsglocke 17 nicht mehr zu einer Kupplungsverbindung zur Gurtwelle 14 führen kann.

## Patentansprüche

1. Selbstsperrender Gurtaufroller (10) mit einer insbesondere bei einem Unfall auslösbaren Notfallstraffeinrichtung (15) für die Gurtwelle (14) und mit einer ebenfalls an die Gurtwelle (14) angeschlossenen zweiten, als reversibel arbeitende Vorstraffeinrichtung ausgebildeten Straffereinrichtung, wobei die Notfallstraffeinrichtung (15) mit einer größeren Drehgeschwindigkeit ausgelegt ist als die von der Vorstraffeinrichtung erzeugte Drehgeschwindigkeit und eine zwischen Vorstraffeinrichtung und Gurtwelle (14) eingerichtete und ein bewegliches Kupplungsglied (20) aufweisende Kupplung derart ausgebildet ist, dass nach Auslösung der Notfallstraffeinrichtung (15) die **dadurch** in eine schnellere Drehung versetzte Gurtwelle (14) das Kupplungsglied (20) in dessen Freigabestellung zurückführt und so die Kupplungsverbindung zwischen Gurtwelle (14) und Vorstraffeinrichtung aufhebt, **dadurch gekennzeichnet, dass** das mit der Gurtwelle (14) verbundene Kupplungsteil (17) der Kupplung an der Gurtwelle (14) über wenigstens eine Sollbruchstelle (40) lösbar befestigt und derart ausgebildet ist, dass bei Auslösung der Notfallstraffeinrichtung (15) das Kupplungsteil (17) gegenüber der mit der größeren Drehgeschwindigkeit in Drehung versetzten Gurtwelle (14) bis zum Abreißen der wenigstens einen Sollbruchstelle (40) zurückbleibt.

2. Selbstsperrender Gurtaufroller nach Anspruch 1, **dadurch gekennzeichnet, dass** das Kupplungsteil (17) mit einer seine Beharrung gegenüber der schnell drehenden Gurtwelle (14) herbeiführenden großen Masseträgheit ausgebildet ist.

3. Selbstsperrender Gurtaufroller nach Anspruch 1, **dadurch gekennzeichnet, dass** an dem Kupplungsteil (17) eine durch die bei anfänglicher schneller Drehung des Kupplungsteils (17) gemeinsam mit der Gurtwelle (14) einwirkenden Fliehkräfte in Eingriff mit einem weiteren Bestandteil (13) des Gurtaufrollers (10) ausgesteuerte Fliehkraftkupplung (41, 43) angeordnet ist.

4. Selbstsperrender Gurtaufroller nach Anspruch 3, **dadurch gekennzeichnet, dass** der zum Eingriff der Fliehkraftkupplung (41, 43) eingerichtete weitere Bestandteil des Gurtaufrollers (10) ein unbewegliches Bauteil des Gurtaufrollers (10) ist.

5. Selbstsperrender Gurtaufroller nach Anspruch 3, **dadurch gekennzeichnet, dass** der zum Eingriff der Fliehkraftkupplung (41, 43) eingerichtete weitere Bestandteil des Gurtaufrollers (10) das von der Vorstraffeinrichtung beaufschlagte Abtriebsrad (13) ist.

6. Selbstsperrender Gurtaufroller nach Anspruch 4 oder 5, **dadurch gekennzeichnet, dass** die Fliehkraftkupplung aus einer an dem Kupplungsteil (17) radial ausschwenkbar gelagerten Zahnklinke (41) besteht, der eine am weiteren Bestandteil (13) des Gurtaufrollers (10) ausgebildete Gegenverzahnung (43) zugeordnet ist.

7. Selbstsperrender Gurtaufroller nach Anspruch 4 oder 5, **dadurch gekennzeichnet, dass** die Fliehkraftkupplung aus wenigstens einer sich unter Einwirkung der Fliehkraft radial aufstellenden Bremsbacke besteht, die mit dem weiteren Bestandteil des Gurtaufrollers (10) in Eingriff gelangt.

## Claims

1. A self-locking belt retractor (10) comprising an emergency tensioning device (15) for the belt shaft (14) which can be triggered in particular in the event of an accident and comprising a second tensioning device which is configured as a reversibly operating pre-tensioning device and which is likewise connected to the shaft (14),wherein the emergency tensioning device (15) is designed with a greater rotational speed than the rotational speed produced by the pre-tensioning device and a coupling disposed between the pre-tensioning device and belt shaft (14) and comprising a movable coupling member (20) is configured in such a manner that after triggering the emergency tensioning device (15), the belt shaft (14) which is thereby made to rotate more rapidly returns the coupling member (20) to its release position and thus cancels the coupling connection between belt shaft (14) and pre-tensioning device, **characterised in that** the coupling part (17) of the coupling connected to the belt shaft (14) is detachably fastened to the belt shaft (14) via at least one predetermined breaking point (40) and is configured in such a manner that when the emergency tensioning device (15) is triggered, the coupling part (17) lags behind the belt shaft (14) which is rotated at the greater rotational speed until the at least one predetermined breaking point (40) tears.

2. The self-locking belt retractor according to claim 1, **characterised in that** the coupling part (17) is configured with a large inertial mass which brings about its inertia with respect to the rapidly rotating belt shaft (14).

3. The self-locking belt retractor according to claim 1, **characterised in that** a centrifugal coupling (41, 43) controlled by the centrifugal forces acting during the initial rapid rotation of the coupling part (17) jointly with the belt shaft (14) in engagement with a further component (13) of the belt retractor (10) is arranged on the coupling part (17).

4. The self-locking belt retractor according to claim 3, **characterised in that** the further component of the belt retractor (10) provided for engagement of the centrifugal coupling (41, 43) is a fixed component of the belt tensioner (10).

5. The self-locking belt retractor according to claim 3, **characterised in that** the further component of the belt retractor (10) provided for engagement of the centrifugal coupling (41, 43) is the driven wheel (13) acted upon by the pre-tensioning device.

6. The self-locking belt retractor according to claim 4 or 5, **characterised in that** the centrifugal coupling consists of a toothed catch (41) which can be pivoted out radially on the coupling part (17) to which is assigned a mating toothed structure (43) configured on the further component (13) of the belt retractor (10).

7. The self-locking belt retractor according to claim 4 or 5, **characterised in that** the centrifugal coupling consists of at least one brake shoe which is deployed radially under the action of the centrifugal force, and which enters into engagement with the further component of the belt retractor (10).

## Revendications

1. Enrouleur de ceinture (10) autobloquant avec un dispositif de tension d'urgence (15) pouvant être déclenché en particulier en cas d'accident pour l'arbre de ceinture (14) et avec un deuxième dispositif tendeur réalisé comme un dispositif de prétension travaillant de manière réversible, raccordé également à l'arbre de ceinture (14), le dispositif de tension d'urgence (15) étant conçu avec une vitesse de rotation supérieure à la vitesse de rotation générée par le dispositif de prétension et un accouplement installé entre le dispositif de prétension et l'arbre de ceinture (14) et présentant un organe d'accouplement (20) mobile étant réalisé de sorte qu'après le déclenchement du dispositif de tension d'urgence (15), l'arbre de ceinture (14) mis par là-même en rotation plus rapide ramène l'organe d'accouplement (20) dans sa position de libération et supprime alors la liaison d'accouplement entre l'arbre de ceinture (14) et le dispositif de prétension, **caractérisé en ce que** l'élément d'accouplement (17) relié à l'arbre de ceinture (14) de l'accouplement est fixé de manière détachable sur l'arbre de ceinture (14) par au moins un point de rupture privilégié (40) et est réalisé de sorte que lors du déclenchement du dispositif de tension d'urgence (15), l'élément d'accouplement (17) reste en arrière vis-à-vis de l'arbre de ceinture (14) mis en rotation à la vitesse de rotation supérieure jusqu'à la rupture du point de rupture privilégié au nombre d'un au moins.

2. Enrouleur de ceinture autobloquant selon la revendication 1, **caractérisé en ce que** l'élément d'accouplement (17) est réalisé avec une grande inertie de masses produisant son inertie par rapport à l'arbre de ceinture (14) tournant rapidement.

3. Enrouleur de ceinture autobloquant selon la revendication 1, **caractérisé en ce que** sur l'élément d'accouplement (17) est disposé un accouplement centrifuge (41, 43) asservi par les forces centrifuges agissant lors de la rotation rapide initiale de l'élément d'accouplement (17) conjointement avec l'arbre de ceinture (14) en engagement avec un autre constituant (13) de l'enrouleur de ceinture (10).

4. Enrouleur de ceinture autobloquant selon la revendication 3, **caractérisé en ce que** l'autre constituant installé pour l'engagement de l'accouplement centrifuge (41, 43) de l'enrouleur de ceinture (10) est un composant immobile de l'enrouleur de ceinture (10).

5. Enrouleur de ceinture autobloquant selon la revendication 3, **caractérisé en ce que** l'autre constituant installé pour l'engagement de l'accouplement centrifuge (41, 43) de l'enrouleur de ceinture (10) est la roue de sortie (13) sollicitée par le dispositif de prétension.

6. Enrouleur de ceinture autobloquant selon la revendication 4 ou 5, **caractérisé en ce que** l'accouplement centrifuge se compose d'un cliquet denté (41) monté de manière radialement pivotante vers l'extérieur sur l'élément d'accouplement (17), auquel est associée une contre-denture (43) réalisée sur l'autre constituant (13) de l'enrouleur de ceinture (10).

7. Enrouleur de ceinture autobloquant selon la revendication 4 ou 5, **caractérisé en ce que** l'accouplement centrifuge se compose d'au moins une mâchoire de frein se plaçant radialement sous l'effet de la force centrifuge, laquelle vient en prise avec l'autre constituant de l'enrouleur de ceinture (10).
